# NEUE EUROPÄISCHE PATENTSCHRIFT

(11) **EP 0 349 831 B2**
(45) Veröffentlichungstag und Bekanntmachung des Hinweises auf die Entscheidung über den Einspruch: **27.11.1996**
(45) Hinweis auf die Patenterteilung: 13.01.1993
(21) Anmeldenummer: 89111267.4
(22) Anmeldetag: 21.06.1989
(51) Int. Cl.: D01H 1/22

(54) **Synchronisierbare Antriebssysteme**
Synchronisable propulsion system
Système d'entraînement synchronisable

(30) Priorität: 06.07.1988 CH 2571/88
(43) Veröffentlichungstag der Anmeldung: 10.01.1990
(73) Patentinhaber: MASCHINENFABRIK RIETER AG, CH-8406 Winterthur (CH)
(72) Erfinder: Oehler, Reinhard, CH-8415 Berg am Irchel (CH); Meyer, Urs, CH-8172 Niederglatt (CH); Lattion, André, CH-8472 Seuzach (CH)

(56) Entgegenhaltungen:
- EP-B- 0 141 505
- DE-C- 2 753 924
- DE-C- 2 911 379
- GB-A- 2 104 116
- Chemiefasern/Textilindustrie, Dezember 1983, Seiten 847 - 851

## Beschreibung

Diese Erfindung bezieht sich auf Antriebssysteme mit über die Speisefrequenz drehzahlgesteuerten Elektromotoren, z.B. Synchronmotoren, Reluktanzmotoren, drehzahloder lagegeregelte Asynchronmotoren sowie permanentmagneterregte Motoren. Solche Systeme finden heutzutage zunehmend in Textilmaschinen aller Arten Anwendung, stehen jedoch besonders in Zusammenhang mit der Ringspinnmaschine zur Diskussion, so dass diese Maschine als Ausgangspunkt für die nun vorgeschlagenen Erfindung angenommen werden kann, ohne dabei die Anwendung der Erfindung auf diesen Maschinentyp einzuschränken.

Jede einzelne Spinnposition der Ringspinnmaschine umfasst drei wesentliche, zu bewegende Arbeitselemente, nämlich die Spindel, das Streckwerk und den Ringträger (die Ringbank). Einer Spinnposition ist normalerweise eine eigene Spindel zugeordnet, während aber das Streckwerk und die Ringbank sich über mehrere Spinnpositionen (meistens über die Gesamtlänge einer Maschinenseite erstrecken). Aus den nachfolgenden erwähnten Gründen sind Bestrebungen im Gang, das heute zentrale Antriebssystem der Ringspinnmaschine (Hauptantriebsmotor mit Getriebe zur Verteilung der Antriebsenergie auf die verschiedenen Arbeitselemente) zu "dezentralisieren".

Die Hauptgründe sind:
- für den Einzelspindelantrieb
   - höhere Produktivität
   - Energieeinsparung
   - Lärmreduktion
   - höhere Drehzahlen
   - niedrige Fadenbruchzahlen
- für den Einzelstreckwerkantrieb
   - keine Wechselräder
   - einfache und schnelle Bedienung
   - Möglichkeit der Fernbedienung
   - Feineinstellung möglich.

   Wenn die drei obenerwähnten Arbeitselemente individuell betrachtet werden, sind diese Bestrebungen schon recht erfolgreich gewesen - es stehen einige "Einzelantriebssysteme" zur Verfügung, welche die Spindeln einzeln (oder gruppenweise) antreiben und das Streckwerk mit einem eigenen Antrieb versehen. Dabei kann die Ringbank entweder gemeinsam mit dem Streckwerk oder auch von einem eigenen Antrieb bewegt werden. Trotz einer Fülle solcher Vorschläge ist aber bislang kein Einzelantriebssystem in die Praxis eingeführt worden.
   Während die verschiedenen dezentralisierten Antriebssysteme für die Spindeln, das Streckwerk und die Ringbank noch verbesserungs- bzw. optimierungsfähig sind, liegen die verbleibenden Hauptprobleme in der Zusammenwirkung dieser Antriebe untereinander und innerhalb des Antriebssystems des Streckwerkes, insbesondere beim Anfahren und Abstellen der Maschine. In dieser Phase sind Abweichungen von den vorgegebenen Drehzahlen eher zu erwarten und für die technologischen Werte des gesponnenen Garnes gefährlich. Dies stellt strenge Anforderungen an die Eignung eines Antriebssystems für den Praxiseinsatz. Insbesondere
   - sind die Spindeln aus dem Stillstand auf die Betriebsdrehzahl zu beschleunigen (bzw. wieder zum Stillstand zu bringen) und zwar mit einer vorgegebenen Anlaufsteilheit um Fadenbrüche zu vermeiden,
   - ist das Streckwerk (und die Ringbank) derart im Verhältnis zu den Spindeln zu bewegen, dass seinerseits keine Fadenbrüche entstehen und andererseits die beim Anfahren (bzw. beim Abstellen) entstehende Garnqualität derjenigen des normalen Betriebes entspricht (möglichst gleich ist).

   Ein Antriebssystem, welches diese Anforderungen erfüllt, muss aber gleichzeitig kostengünstig herstellbar sein, um mit den konventionellen zentralen Antrieben konkurrieren zu können.
   Es ist seit langem bekannt (z.B. aus DE-A- 2 203 833), dass über die Speisefrequenz drehzahlgesteuerte Antriebsmotoren Ansätze für die Lösung der genannten Probleme anbieten. Auf diesen Motoren aufgebaute Antriebssysteme sind aber nicht ohne weiteres geeignet, alle genannten Anforderungen zu erfüllen. Sobald (bzw. solange) ein solcher Motor mit seiner Speisefrequenz synchron läuft, kann er (innerhalb seiner Lastgrenzen) in einem beliebigen Verhältnis zu anderen solchen Motoren gehalten werden. Es ist aber ein kennzeichendes Merkmal solcher Motoren, dass sie bei knappausreichendel Dimensionierung entweder nicht sofort aus dem Stillstand (bzw. bis zum Stillstand) im Gleichtritt mit ihrer Speisefrequenz laufen, sondern vielmehr unterhalb einer gewissen Geschwindigkeit (Mindestdrehzahl bzw. Mindestfrequenz) unbeherrschbar sind, und/oder nicht imstande sind, aus dem Stillstand ein ausreichendes Beschleunigungsmoment aufzubringen. Dieses Merkmal ruft insbesondere in Zusammenhang mit dem Antreiben des Streckwerkes Probleme hervor, wie nachstehend näher beschrieben wird.
   Das Streckwerk einer Ringspinnmaschine besteht aus einer Mehrzahl sogenannter Stränge (Zylinder/Walzen Paare). Die Drehzahlverhältnisse zwischen den Strängen sind für die Garnnummerhaltung massgebend, während das Drehzahlverhältnis zwischen dem Lieferstrang und der Spindel für die Garndrehung entscheidend ist. Die Stränge müssen "Zahnradgenau" (d.h. in einem vorbestimmten Verhältnis der Drehwinkel) aus dem Stillstand anlaufen und beim Abstellen wieder stillgesetzt werden. Ausserdem sollte beim Anfahren das Streckwerk eine Mindestbeschleunigung aufweisen, weil die Fäden beim Maschinenstillstand vorzugsweise mit den Spindeln verbunden bleiben und die Spindeln derart rasch angefahren werden, dass sich die Fäden spannen und die Fadenballons bilden. Wenn unter diesen Umständen das Streckwerk nicht schnell genug hochlaufen kannn, werden Drehungsfehler und letzthin Massenfadenbrüche entstehen. Ferner sollten aus den gleichen Gründen die Umdrehungen der Streckwerkzylinder und Walzen beim Abstellen der Maschine bis zum Stillstand (oder bis zu einer niedrigen Drehzahl) der Spindeln aufrechterhalten werden, was wegen beträchtlicher Unterschiede zwischen dem Trägheitsmoment der Spindeln und demjenigen des Streckwerkes erhebliche Probleme hervorruft.
   Vorzugsweise ist in einem "Streckwerkeinzelantriebssystem" mindestens ein Antrieb für den Lieferstrang und ein für die anderen Stränge des Streckwerkes vorgesehen (wenn nicht je ein Antrieb für die Stränge). Aus den vorerwähnten Gründen ist es aber unmöglich, solche Antriebssysteme mit den kostengünstigen, über Speisefrequenz drehzahlgesteuerte Motoren zu realisieren und unterhalb einer gewissen Drehzahl die erforderlichen Verhältnisse ohne zusätzliche Massnahmen einzuhalten.
   Diese Problematik ist in DE-A-2753924 angesprochen, wonach ein Antrieb für eine Ringspinnmaschine vorgesehen ist. Im Ausführungsbeispiel nach der Fig. 1 der DE-A-2753924 wird der Mittelzylinder und der Lieferzylinder über je eine elektromagnetische Kupplung und je ein Getriebe mit nicht verstellbarer Unter- oder Uebersetzung durch je einen gesonderten Synchronmotor angetrieben. Die Spindeln werden durch einen Tangentialriemen angetrieben, welcher von einem drehzahlverstellbaren, direkt vom Netz gespeisten Asynchronmotor angetrieben ist. Die Welle dieses Asynchronmotors treibt auch einen Taktgeber, der eine Ausgangsfrequenz erzeugt, die dem Eingang eines Frequenzvervielfachers zugeleitet wird. Der Frequenzvervielfacher erhöht die Ausgangsfrequenz des Taktgebers, um eine hohe Eingangsfrequenz für einen verstellbaren digitalen Frequenzteiler zu erzeugen. Dem Frequenzteiler ist ein Ringzähler nachgeschaltet, der seine Eingangsimpulse zyklisch auf Ausgangsleitungen verteilt, die an entsprechende Eingänge eines Wechselrichters angeschlossen sind, welcher den Synchronmotor des Lieferzylinders speist.
   Der Synchronmotor des Lieferzylinders treibt auch einen Taktgeber, der auf eine ähnliche Art und Weise die Speisefrequenz für den Synchronmotor des Mittelzylinders erzeugt. Wenn die Teilerverhältnisse der Frequenzteiler auf bestimmte Werte eingestellt sind, bestehen zwischen den Drehzahlen der drei Antriebsmotoren exakte, durch die Einstellung der Teilerverhältnisse bestimmte Drehzahlverhältnisse. Die Betriebsdrehzahl des Asynchronmotors lässt sich mittels eines Stellgliedes verstellen, wodurch sich auch die Betriebsdrehzahlen der Synchronmotoren entsprechend proportional ändern.
   Falls die Wechselrichter derart ausgebildet sind, dass sie nicht bereits von der Frequenz Null an brauchbaren Strom für den Synchronlauf der Synchronmotoren liefern, sondern erst ab einer etwas über Null liegenden geringen Frequenz, sollten beim Anlauf der Elektromotoren die Kupplungen zunächst ausgekuppelt sein, sodass die Synchronmotoren nicht in Synchronismus mit den Frequenzen der sie speisenden Ströme anlaufen müssen. Erst wenn der Spindelantriebsmotor eine niedrige Drehzahl erreicht hat, ab der die Synchronmotoren des Streckwerkantriebes synchron mit der Speisefrequenzen hochgefahren werden können, werden beide elektromagnetischen Kupplungen gleichzeitig mittels eines Schalters eingeschaltet. Wie dieser Schalter betätigt werden soll, wird nicht erklärt.
   Ein weiteres Antriebssystem für eine Effektzwirnmaschine ist in DE-A-28 49 567 gezeigt worden und umfasst für jeden Streckwerkstrang zwei Motoren, die je über eine dem jeweiligen Motor zugeordnete Kupplung und eine Riemenverbindung mit dem entsprechenden Strang gekoppelt werden können. Die Steuerung für diese Kupplungen ist zur Erzielung von Effekten in Garn ausgelegt und betrifft nicht das Hochlaufen der Motoren ohne Last und das gleichzeitige Schalten der Kupplungen.
   Gemeinsam mit DE-A-2753924 sieht die Erfindung eine Ringspinnmaschine vor, die mit einer Vielzahl von drehbaren Spindeln, einem Antrieb für die Spindeln, einem Streckwerk, das mehrere Zylinder umfasst, und einem über seine Speisefrequenz drehzahlgesteuerten Elektromotorfür das Streckwerk, einer steuerbaren Vorrichtung, zum Erzeugen der Speisefrequenz für den Motor, und einer Steuervorrichtung zum Steuern der steuerbaren Vorrichtung versehen ist, wobei zwischen dem Motor und einem der Zylinder eine Kupplung und ein zwischen der Kupplung und dem Zylinder angeordnetes Getriebe vorgesehen ist, so dass beim Anlaufen der Maschine der Motor bei geöffneter Kupplung bis zum Erreichen einer ersten Solldrehzahl ohne Last hochlaufen kann.
   Die Ringspinnmaschine nach der Erfindung ist gegenüber der DE-A-2753924 dadurch gekennzeichnet, dass der genannte Zylinder von beiden Enden durch je einen ersten und einen zweiten Elektromotor antreibbar ist, dass zwischen jedem Motor und dem entsprechenden Ende des genannten Zylinders eine Kupplung vorgesehen und zwischen jeder Kupplung und dem Zylinder ein Getriebe vorhanden ist, dass die Steuervorrichtung sowohl mit den Kupplungen als auch mit der steuerbaren Vorrichtung leitend verbunden ist und dass die Steuervorrichtung auch das Öffnen und Schliessen der Kupplungen steuert, wobei die Steuervorrichtung die Schaltzeitpunkte für das Schliessen bzw. Öffnen der Kupplungen derart bestimmt, dass beim Anlaufen der Maschine die Motorendrehzahl erst dann durch das gleichzeitige Schliessen der Kupplungen an den genannten Zylinder übertragbar ist, wenn der erste und der zweite Motor mit ihrer von der Steuervorrichtung gesteuerten Speisefrequenz synchronisiert sind, bzw. beim Abstellen durch gleichzeitiges Öffnen beider Kupplungen nicht mehr an den genannten Zylinder übertragbar ist, wenn die Synchronisierung des ersten und des zweiten Motores mit der Speisefrequenz nicht mehr gewährleistet ist, und dass zwischen jedem Motor (40) und der ihm zugeordneten Kupplung (56) ein zweites Getriebe (54) eingeschaltet ist.
   Die Steuervorrichtung und die Kupplungen können derart realisiert werden, dass die Motordrehzahl überwacht wird und dass die Last erst dann mit den Motoren gekoppelt wird, wenn der Motor beim Hochlaufen eine Mindestdrehzahl erreicht und synchronisiert hat, bzw. dass die Last von der Maschine abgekoppelt wird, wenn jeder Motor beim Abstellen des Systems mit einer Mindestdrehzahl läuft. Vorzugsweise läuft jeder Motor unterhalb dieser Mindestdrehzahl ohne Last hoch. Dazu kann z.B. ein Sensor vorgesehen werden, der einem Motor zugeordnet ist und seine Drehzahl meldet.
   Diese bevorzugten Varianten sind aber nicht erfindungs- wesentlich. Beim Anfahren könnte z.B. die abgelaufene Zeit ab Ingangsetzung eines Hochlaufprogramms überwacht und die Last erst nach Ablauf einer vorbestimmten Zeitperiode mit den Motoren gekoppelt werden. Die Abkoppelung der Last von den Motoren könnte auf entsprechende Weise gemäss einem Abstellprogramm bewirkt werden.
   Vorzugsweise ist eine Drehmomentübersetzung derart zwischen jedem Motor und der Last vorgesehen, dass das dem Motor bei Zuschaltung der Last auferlegte Trägheitsmoment nicht ausreicht, um den Motor wieder aus dem Gleichtritt mit der Speisefrequenz zu ziehen. Die Drehmomentübersetzung kann durch ein Zahnradgetriebes erfolgen. Es mag sich aber dann als vorteilhaft erweisen, ein dämpfendes Lastübertragungsmittel (z.B. ein Zahnriemengetriebe) zwischen dem Motor und dem getriebe vorzusehen, da frequenzgesteuerte Drehstrommotoren in gewissen Betriebszuständen (bei niedrigen Drehzahlen) Drehmomentimpulse abgeben, die zu Schäden am Zahnradgetriebe führen können. Es wird sich auch meistens als vorteilhaft erweisen, eine Drehzahlübersetzung derart vorzusehen, dass die relative Geschwindigkeit der zu koppelnden Teile klein ist. Das erwähnte Lastübertragungsmittel kann auch letztere Funktion ausüben. Wenn zwei Übersetzungen vorhanden sind, ist das schaltbare Mittel vorteilhafterweise zwischen den Übersetzungen angeordnet.
   Vorzugsweise werden die anderen Stränge des gleichen Streckwerkes durch einen zweiten oder durch je einen Antrieb gemäss dieser Erfindung getrieben, wobei die Drehzahlen der verschiedenen Motoren dieser Antriebe gleichzeitig auf ihre jeweiligen Stränge übertragen werden.
   Als Beispiele werden verschiedene Ausführungen nuin näher anhand der Zeichnungen beschrieben. Es zeigen :
   Fig. 1: eine schematische Darstellung verschiedener Antriebe für eine Ringspinnmaschine,
   Fig. 2: weitere Einzelheiten der in Fig. 1 dargestellten Antriebe,
   Fig. 3: eine Ausführung mit einer für diese Erfindung geeigneten Steuerung, und
   Fig. 4: ein Ablaufschema für das Anfahren und Abstellen einer Ringspinnmaschine mit einem Antriebssystem gemäss dieser Erfindung.

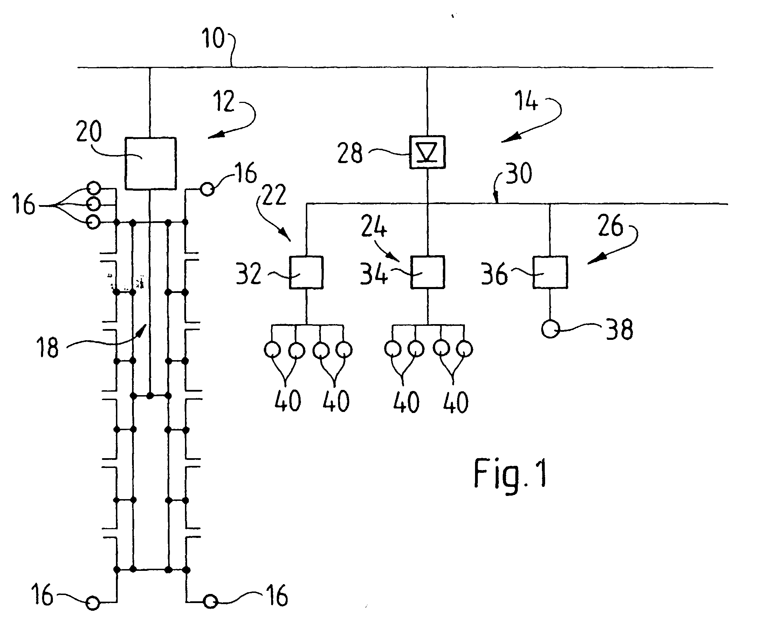

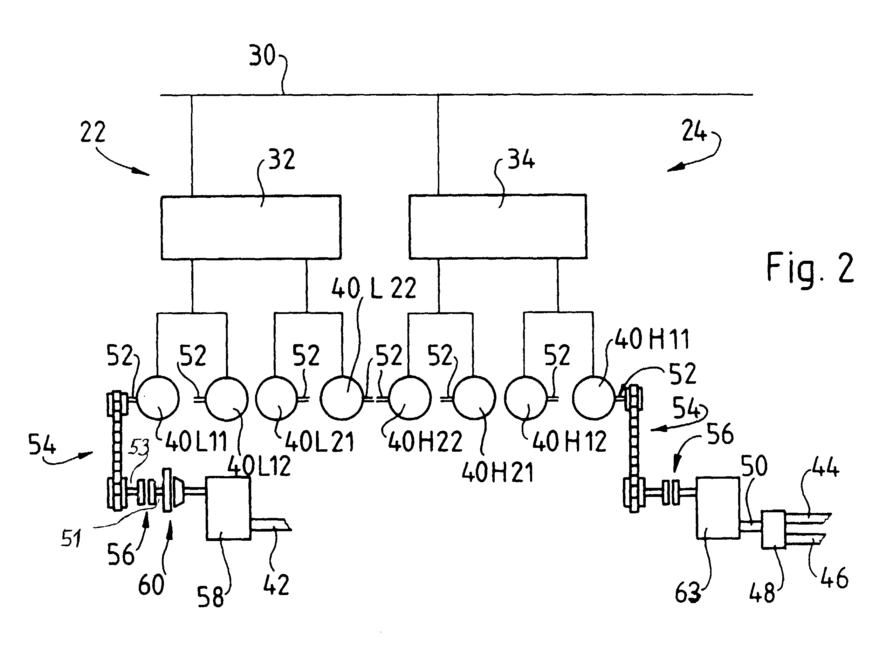

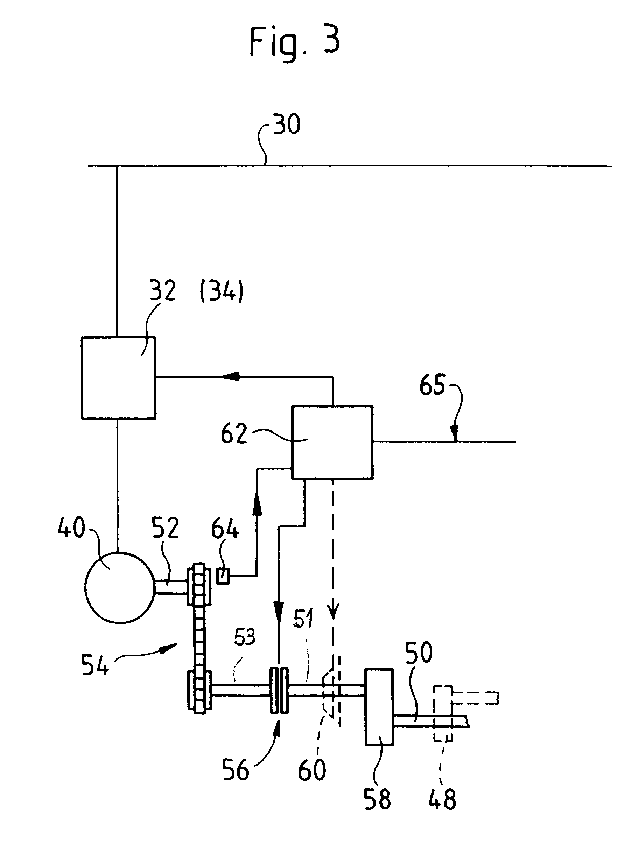

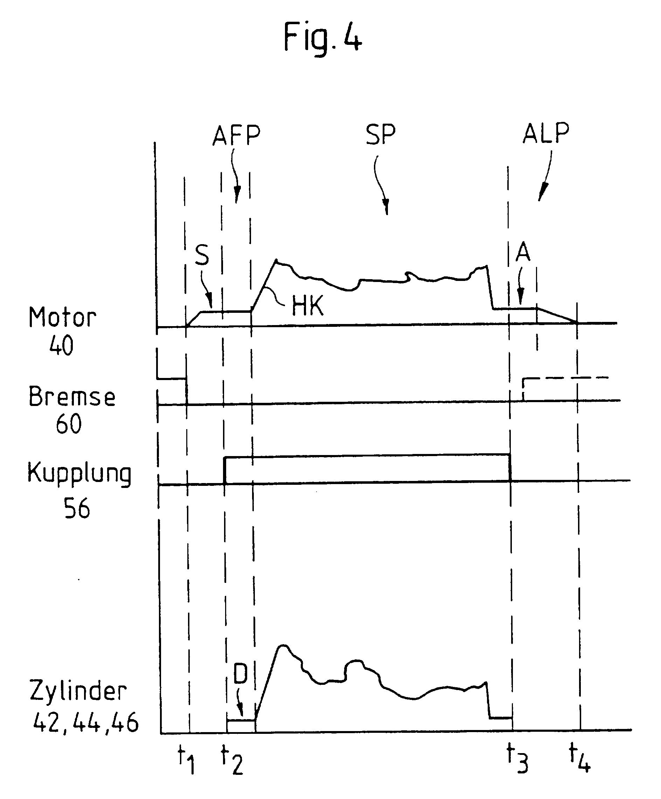

   In Fig. 1 weist das Bezugszeichen 10 auf eine Leitung aus einem Versorgungsnetz zur Speisung elektrischer Energie, mit einer vorbestimmten Spannung und Frequenz. Die Antriebssysteme der Ringspinnmaschine (nicht als solche angedeutet) werden mit der Leitung 10 verbunden. In diesem Fall sind innerhalb der Maschine zwei Antriebssysteme vorgesehen, nämlich ein erstes System 12 für den Spindelantrieb und ein zweites System 14 für den Antrieb der Streckwerke und Ringbänke.
   Der Spindelantrieb ist für diese Erfindung von zweitrangiger Bedeutung und wird deswegen nur kurz beschrieben. In Fig. 1 wird angenommen, die Spindeln werden je durch einen eigenen Einzelmotor angetrieben, wobei gewisse Motoren 16 als Beispiele in Fig. 1 angedeutet worden sind. Im praktischen Einsatz kann heutzutage eine Ringspinnmaschine bis zu 600 Spindeln pro Maschinenseite aufweisen. Die einzelnen Motoren 16 werden über ein Energieverteilersystem 18 mit einem gemeinsamen Frequenzumrichter 20 im Maschinenendkopf verbunden. Der Frequenzumrichter 20 kann zum Beispiel einen Gleichrichter (nicht gezeigt) und einen, daran angeschlossenen Wechselrichter (auch nicht gezeigt) umfassen. Die Motoren 16 können kostengünstige Motoren, z.B. Asynchronmotoren sein. Wie schon angedeutet, ist die Erfindung nicht auf ein solches Antriebssystem für die Spindeln eingeschränkt. Die Spindeln könnten z.B. gruppenweise oder sogar durch einen einzigen Motor über Tangentialriemen angetrieben werden.
   Wichtig ist aber, dass keine mechanische Verbindung zur Koppelung des GeschwindigkeitsVerhältnisses zwischen den Spindeln und dem ihr zugeordneten Streckwerk vorhanden ist. Dieses Verhältnis ist nur durch die elektrische Steuerung bestimmt.
   Das zweite Antriebssystem 14 beinhaltet drei verschiedene Antriebe 22, 24, 26. Diese drei Antriebe werden von einem gemeinsamen Gleichrichter 28 über einen Gleichstromzwischenkreis 30 mit Energie aus der Leitung 10 versorgt. Jeder Antrieb 22, 24, 26 ist mit einem eigenen Wechselrichter 32, 34, 36 versehen, der gemäss einer eigenen Sollfrequenz (nicht angedeutet) den Gleichstrom an seinem Eingang in Wechselstrom mit einer vorbestimmten Frequenz an seinem Ausgang umwandelt.
   Weil der Antrieb 26 auch von zweitrangiger Bedeutung ist, wird er vorerst kurz beschrieben. Dieser Antrieb dient zur Bewegung der Ringbänke (je eine Ringbank pro Maschinenseite, nicht gezeigt), wozu er einen Asynchronmotor 38 umfasst. Die Bewegungen der Ringbänke im Verhältnis zu den Spindeln sind für den Kopsaufbau wichtig, stellen aber keine besonders schwierigen Aufgaben an die Steuerung und können im Zusammenhang mit dieser Erfindung vernachlässigt werden.
   Genau das Gegenteil gilt in Bezug auf die Streckwerkantriebe 22, 24. Der genaue Lauf der Streckwerkzylinder im Verhältnis zueinander und zu den Spindeln ist für die Garnnummerhaltung massgebend und aus diesem Grunde werden vorzugsweise Synchronmotoren 40 in diesen Antrieben eingesetzt. Die Anordnungen der Antriebe 22, 24 werden nun anhand der Fig. 2 näher erläutert.
   In einer Ringspinnmaschine sind normalerweise zwei Streckwerke, je eines pro Maschinenseite, vorhanden. Jedes Streckwerk besteht aus einem vorderen oder Lieferzylinder, einem Mittelzylinder und einem hinteren oder Eingangszylinder. Wenn die Maschine lang ist (über 300 Spindeln pro Maschinenseite) ist es vorteilhaft, die Zylinder von beiden Enden her anzutreiben, um Garnfehler durch Torsionswirkungen in den Zylinder der Maschine entlang zu vermeiden (siehe z.B. US-PS 4,161,862, Zinser: US-PS 4,314,388, Zinser: US-PS 4,561,152, Toyoda: US-PS 3,339, 361, Jefferson Mills). Eine solche Anordnung ist auch im Beispiel der Fig. 1 und 2 angenommen. Pro Streckwerk Lieferzylinder (nicht gezeigt) werden dementsprechend zwei Antriebsmotoren 40 vorgesehen und alle vier werden vom Wechselrichter 32 mit elektrischer Energie steuerbarer Frequenz gespeist. Zur bessern Ueber sicht der Bezeichnungen werden diese Motoren in Fig. 2 mit 40 L 11 (Lieferzylinder 1, Motor 1), 40 L 12 (Lieferzylinder 1, Motor 2), 40 L 21 (Lieferzyinder 2, Motor 1) und 40 L 22 (Lieferzylinder 2, Motor 2) angedeutet. Die einfache Bezeichnung 40 wird weiterhin benutzt, wenn die Beschreibung für alle diese Motoren zutrifft.
   Ein mit dem Antriebsmotor 40 L 11 gekoppeltes Endstück 42 vom Streckwerkzylinder ist als Beispiel gezeigt; die anderen Motoren 40 des Antriebes 22 sind auf eine ähnliche Art und Weise mit ihren entsprechenden Endstücken der Streckwerkzylinder gekoppelt. Die Verbindung zwischen diesen Motoren 40 und ihren Streckwerkzylindern 42 werden später noch näher beschrieben aber vorerst wird die Antriebsanordnung 24 für den Mittel- und Hinterzylinder erläutert.
   In Fig. 2 ist ein Endstück 44 eines Hinterzylinders und das entsprechende Endstück 46 eines Mittelzylinders angedeutet. Diese Zylinder werden durch ein Wechselgetriebe 48 miteinander gekoppelt, so dass sie in einem durch das Getriebe 48 vorbestimmten Drehzahlverhältnis zueinander laufen. Das Getriebe 48 ist von einer Eingangswelle 50 angetrieben und letztere ist über eine noch zu beschreibende Verbindung mit einem Motor 40 des Antriebes 24 gekoppelt. Da zwei Streckwerke (links und rechts) vorhanden sind, und die Hinteren- und Mittelzylindergruppen auch von beiden Enden her betrieben werden, enthält der Antrieb 24 auch 4 Synchronmotoren 40, wie der Antrieb 22, und diese Motoren werden mit den Zusatzbezeichnungen H11, H12, H21, H22 zur Ueberschaulichkeit versehen.
   Es werden nun die Verbindungen zwischen den Motoren 40 und ihren jeweiligen angetriebenen Wellen (in Antrieb 22 den Lieferzylinder 42 und in Antrieb 24 den Welle 50) beschrieben. Da die Verbindungen innerhalb eines Antriebes (22 bzw. 24) gleich sind, wird für jeden Antrieb nur eine einzige Verbindung als Beispiel beschrieben.
   Im Antrieb 22 umfasst jede der genannten Verbindungen eine Motorwelle 52, ein Zahnriemengetriebe 54, eine Kupplung 56 und ein mit dem Lieferzylinder verbundenes Zahnradgetriebe 58. Eine Bremse 60 ist zu einem später zu beschreibenden Zweck zwischen der Kupplung 56 und dem Getriebe 58 eingeschaltet.
   Die Verbindung zwischen den Motoren 40 des Antriebes 24 und ihren entsprechenden Wellen 50, sind in verschiedenen Hinsichten sehr ähnlich und so weit als möglich werden die gleichen Bezugszeichen für die gleichen Elemente benützt. Jede Verbindung des Antriebes 24 umfasst die Motorwelle 52, das Zahnriemengetriebe 54, die Kupplung 56 und ein mit der Welle 50 verbundenes Zahnradgetriebe 62. Es ist in diesem Fall keine Bremse 60 notwendig. Einfachheitshalber sind alle Motoren 40 gleich ausgeführt und mit der gleichen Speisefrequenz gespeist. Um die gewünschten Drehzahlunterschiede zwischen dem Lieferzylinder (auch Vorderzylinder genannt) 42 und den Mittel- und Hinterzylinder 46, 44 zu ermöglichen, sind die Getriebe 58, 63 mit entsprechend verschiedenen Uebersetzungen ausgeführt.
   Die Bremsen 60 im Antrieb 22 verhindern die Rückdrehung der Lieferzylinder 42, nachdem die Maschine zum Stillstand gebracht worden ist und die Kupplungen 56 ausgeschaltet worden sind, um dabei die Entstehung eines Garnfehlers bzw. eines Fadenbruches zu verhindern. Dieses Merkmal ist an und für sich bekannt, wird aber nachfolgend im Zusammenhang mit den neuen Kupplungen 56 und ihrer Steuerung näher beschrieben.
   Das Zahnriemengetriebe 54 dient als Dämpfungsmittel, welches vom Motor 40 bei niedrigen Drehzahlen abgegebene Schläge absorbiert und damit das empfindliche Zahnradgetriebe 58 (bzw. 63) schont. Zugleich dient das Getriebe 54 als eine Drehzahl übersetzung, welche die relativ hohe Drehzahl des Motors 40 auf einen niedrigeren Wert am Eingang der Kupplung 56 reduziert.
   Das Zahnradgetriebe 58 bzw. 63 zusammen mit dem Getriebe 54 dient als Drehmomentübersetzung, so dass bei Zuschaltung einer Kupplung 56 der entsprechende Motor 40 nicht mit dem hohen Trägheitsmoment des stillstehenden Zylinders 42 bzw. 44, 46 belastet wird.
   Die Arbeitsweise der in Fig. 2 gezeigten Anordnungen wird nun anhand der Fig. 3 und 4 beschrieben, wobei die Fig. 3 ein beliebiges Beispiel der schon beschriebenen Verbindungen (Fig. 2) zwischen einem Motor 40 und der von diesem Motor angetriebenen Welle 42 bzw. 50 darstellt. Dazu zeigt Fig. 3 eine gemeinsame Steuerung für den Wechselrichter 32 (bzw. 34), die Kupplung 56 und (im Antrieb 22) die Bremse 60. Die Steuerung ist über eine Leitung 65 mit Energie gespeist und eine Notvorrichtung (nicht gezeigt) zur Speisung der Leitung 65 bei einem Stromausfall im vorerwähnten Netz sollte auch vorgesehen werden, so dass die Maschine sowohl beim Netzausfall als auch während des normalen Ablaufes ein vorbestimmtes Abstellprogramm (Fig. 4) durchlaufen kann.
   Fig. 4 zeigt Zeitdiagramme der Anfahrphase AFP und Auslaufphase ALP der Motoren 40, Bremsen 60, Kupplungen 56 und Zylinder 42, 44, 46. Die dazwischenliegenden Spinnphase SP ist nicht dargestellt worden, da sie für diese Erfindung keine Bedeutung hat.
   Es sei angenommen, das Antriebssystem 12 (Fig. 1) für des Spirdelantrieb sei vor dem Zeitpunkt t1 (Fig. 4) schon angelaufen, so dass die Fäden (nicht gezeigt) gespannt sind und die Fadenballons sich gebildet haben. Zum Zeitpunkt t1 schaltet die Steuerung die Bremsen 60 ab, so dass die Vorderzylinder 42 zum Anfahren freigegeben werden. Gleichzeitig wechselt die Steuerung b2 ihr Ausgangssignal an den Wechselrichter 32 (34) von Sollfrequenz 0 auf eine niedrige Sollfrequenz fm (z.B. 5 Hz). Die Motoren 40 fangen sofort an, die Wellen 52 zu drehen, aber nicht sofort mit einer Drehzahl, welche der Sollfrequenz fm entspricht, obwohl zu dieser Zeit die Kupplungen 56 noch offen sind, so dass die Motoren vorläufig ohne Last hochlaufen und synchronisieren können. Nach spätestens einigen Umdrehungen wird jedoch jeder Motor 40 im Gleichtritt mit seiner Sollfequenz fm laufen, was durch die horizontale Strecke S der Anfahrcharakteristik angedeutet und durch einen Sensor 64 (Fig. 3) an die Steuerung gemeldet wird.
   Kurz nachdem sich die Motoren auf diese Weise synchronisiert haben, schaltet die Steuerung alle Kupplungen 56 gleichzeitig ein (Zeitpunkt t2). Die Motorwellen 52 sind nun von den ihnen zugeordneten, bislang stillstehenden Zylindern belastet. Eine solche plötzliche Belastung eines schon angelaufenen Motors könnte leicht dazu führen, dass der Motor wieder aus dem Gleichtritt mit der Sollfrequenz fällt. Um dies zu verhindern, dienen beide Getriebe 54, 58 als Kraft-Übersetzungsmittel dazu, das relativ hohe Trägheitsmoment eines stillstehenden Steckwerkzylinders auf einen relativ niedrigen effektiven Wert auf der Welle 52 zu bringen, wobei eine wesentliche Verminderung des effektiven Wertes durch das Getriebe 58 am Eingang der Kupplung 56 erreicht wird.
   Damit während des Kupplungsvorganges die Relativdrehzahl zwischen der zunächst stehenden Welle 51 und der schon drehenden Welle 53 möglichst klein ist, wird die hohe Motordrehzahl über das Riemengetriebe auf einen niederen Wert reduziert.
   Somit kann gewährleistet werden, dass das effektive Trägheitsmoment der Neubelastung gegenüber der Kapazität des Motors mindestens vom Motor bewältigbar und vorzugsweise vernachlässigbar ist. Dies führt zu einer kostengünstigeren Lösung, ohne erhebliche Überdimensionierung des Motors zur Bewältigung der Beschleunigungslast.
   Die Streckwerkzylinder 42, 44, 46 beginnen simultan um ihre Längsachse zu drehen, und zwar alle mit einer jeweiligen von der Sollfrequenz über die jeweils zugeordneten Getriebe bestimmten Drehzahl (beispielsweise D, Fig. 4), d.h. in vorbestimmtem Drehzahlverhältnis untereinander und zu den Spindeln. Nach einer kurzen Beruhigungszeit bei dieser relativ niedrigen Drehzahl wird die Sollfrequenz von der Steuerung gemäss einer vorprogrammierten Hochlaufkurve HK erhöht, so dass alle Antriebe der Maschine im Gleichtritt auf ihre Betriebsdrehzahl gebracht werden.
   Beim Abstellen werden die verschiedenen Antriebe vorerst ausgehend von der Betriebsdrehzahl auf eine relativ niedrige Drehzahl gebracht (Strecke A des Abstellcharakteristiks, Fig. 4). Diese Drehzahl entspricht vorzugsweise der gleichen Sollfrequenz, die beim Anlaufen zur Synchronisierung der Motoren benutzt wurde. Nach einer kurzen Beruhigungsphase bei dieser Drehzahl öffnet die Steuerung gleichzeitig zum Zeitpunkt t3 alle Kupplungen 56. Infolge der Bremswirkungen innerhalb der Streckwerke bleiben augenblicklich alle Zylinder 42, 44, 46 stehen, was mit dem Auslauf der Spindeln (nicht gezeigt) durch die Steuerung synchronisiert werden kann. Die Motoren können nach diesem "Lastabwurf" abgeschaltet werden und dann frei auslaufen, wobei sie erst z.B. zum Zeitpunkt t4 zum Stillstehen kommen.
   Die Bremsen 60 werden vorzugsweise kurz nach dem Öffnen der Kupplungen getätigt, um ein Rückdrehen der Zylinder zu verhindern. Ueber sehr kurze Zeitintervalle vor und nach der Betätigung der Kupplungen sind die Lieferzylinder 42 somit frei, sich unter der Torsions-wirkung zu drehen - diese Intervalle sind aber zu kurz, um spürbare Auswirkungen im Garn zu erzeugen.
   Der Sensor kann als Impulsgeber ausgeführt werden, wobei die Steuerung die Anzahl vom Geber 64 während einer vorgegebenen Zeitperiode erzeugter Impulse zählt. Die Steuerung leitet nur dann das Schliessen der Kupplungen ein, wenn diese Anzahl Impulse einem vorgegebenen Wert entspricht. Es wird aber aus Fig. 4 klar sein, dass die Steuerung die Kupplungen 56 nach Ablauf einer vorgegebenen Zeit (t1 bis t2) ab Anlauf der Motoren bzw. nach Erreichen einer vorbestimmten niedrigen Drehzahl beim Abstellen schalten könnte.
   Die Erfindung ist nicht auf Merkmale der dargestellten Ausführung eingeschränkt. Die Motoren 40 sind nicht unbedingt Synchronmotoren, sollten aber mit einer Sollfrequenz synchronisierbar sein. Die Sollfrequenz bei der Kopplung bzw. Entkopplung des Motors mit der Last liegt vorzugsweise im Bereich 2 bis 20 Hz., Die Erfindung ermöglicht die Synchronisierung solcher Motoren mit ihrer Sollfrequenz ohne von der Last erzeugten Störungen bzw. Probleme. Der Motor kann während diesen Synchronisierungsintervallen gegen eine vorbestimmte, nicht störende Last arbeiten, läuft aber vorzugsweise ohne Belastung hoch.
   Am besten ist die Motordrehzahl aus zwei Gründen nicht niedriger als 5 Hz zuwählen:
   1. Die in der rotierenden Motormasse vorhandene Rotationsenergie soll für den Kupplungsvorgang möglichst gross sein, um ein Aussertrittfallen zuvermeiden.
   2. ein Drehstrommotor, normaler Bauart, läuft meistens erst ab ca. 5 Hz. unter beherrschbaren Bedingungen.

   Die Energiespeisesysteme können an die Motoren und die Umständen beliebig angepasst werden. Die gemeinsamen Wechselrichter in Fig. 2 können durch Einzelwechselrichter ersetzt werden. Jeder Motor könnte sogar mit einem eigenen Umrichter, ohne Zwischenkreis, versehen werden.
   Die Erfindung bringt dort am meisten Vorteile, wo eine Last aus dem Stillstand, "zahnradgenau" hochlaufen muss, d.h. vorbestimmte Drehbewegungen ausführen muss, aber eine mechanische Energieübertragung nicht alzeptabel (oder mindestens unerwünscht) ist, und insbesondere, wenn eine Mehrzahl solcher Lasten gleichzeitig und in einem vorbestimmten Verhältnis zueinander aus den Stillstand beschleunigt werden müssen.

## Patentansprüche

1. Ringspinnmaschine mit einer Vielzahl von drehbaren Spindeln, einem Antrieb (16,18) für die Spindeln, einem Streckwerk, das mehrere Zylinder (42,44,46) umfasst, und einem über seine Speisefrequenz drehzahlgesteuerten Elektromotor (40) für das Streckwerk, einer steuerbaren Vorrichtung (32) zum Erzeugen der Speisefrequenz für den Motor (40), und einer Steuervorrichtung (62) zum Steuern der steuerbaren Vorrichtung (32), wobei zwischen dem Motor (40) und einem der Zylinder (42,44,46) eine Kupplung (56) und ein zwischen der Kupplung (56) und dem Zylinder (42,44,46) angeordnetes Getriebe (58,63) vorgesehen ist, und beim Anlaufen der Maschine der Motor (40) bei geöffneter Kupplung (56) bis zum Erreichen einer ersten Solldrehzahl ohne Last hochlaufen kann,
dadurch gekennzeichnet,
dass der genannte Zylinder (42,44,46) von beiden Enden durch je einen ersten und einen zweiten Elektromotor (40) antreibbar ist, dass zwischen jedem Motor (40) und dem entsprechenden Ende des genannten Zylinders (42,44,46) eine Kupplung (56) vorgesehen und zwischen jeder Kupplung (56) und dem Zylinder (42,44,46) ein Getriebe (58,63) vorhanden ist, dass die Steuervorrichtung (62) sowohl mit den Kupplungen (56) als auch mit der steuerbaren Vorrichtung (32) leitend verbunden ist, und dass die Steuervorrichtung (62) auch das Öffnen und Schliessen der Kupplungen (56) steuert, wobei die Steuervorrichtung (62) die Schaltzeitpunkte für das Schliessen bzw. Öffnen der Kupplungen (56) derart bestimmt, dass beim Anlaufen der Maschine die Motorendrehzahl erst dann durch das gleichzeitige Schliessen der Kupplungen (56) an den genannten Zylinder (42,44,46) übertragbar ist, wenn der erste und der zweite Motor (40) mit ihrer von der Steuervorrichtung (62) gesteuerten Speisefrequenz synchronisiert sind, bzw. beim Abstellen durch gleichzeitiges Öffnen beider Kupplungen (56) nicht mehr an den genannten Zylinder (42,44,46) übertragbar ist, wenn die Synchronisierung des ersten und des zweiten Motores (40) mit der Speisefrequenz nicht mehr gewährleistet ist, und dass zwischen jedem Motor (40) und der ihm zugeordneten Kupplung (56) ein zweites Getriebe (54) eingeschaltet ist.

2. Ringspinnmaschine nach Anspruch 1, dadurch gekennzeichnet dass ein Sensor (64) vorhanden ist, welcher die Drehzahl eines Motores (40) an die Steuervorrichtung (62) meldet.

3. Ringspinnmaschine nach Anspruch 1 oder 2, dadurch gekennzeichnet, dass die Steuervorrichtung (62) zum Oeffnender Kupplungen (56) derart ausgelegt ist, dass beim Abstellen der Maschine die Speisefrequenz für die Motoren auf einen vorgegebenen Wert zurückgeht.

4. Ringspinnmaschine nach einem der vorangehenden Ansprüche, dadurch gekennzeichnet, dass der genannte Zylinder (42,44,46) der Lieferzylinder (42) ist.

5. Ringspinnmaschine nach einem der vorstehenden Ansprüche, dadurch gekennzeichnet, dass das zweite Getriebe (54) ein Zahnriemengetriebe ist.

6. Ringspinnmaschine nach einem der vorangehenden Ansprüche, dadurch gekennzeichnet, dass jeder der genannten Motoren (40) ein Synchronmotor ist.

7. Ringspinnmaschine nach einem der vorangehenden Ansprüche, dadurch gekennzeichnet, dass zwischen jeder Kupplung (56) und den genannten Zylindern (42,44,46) eine steuerbare Bremsvorrichtung (60) vorhanden ist, die mit der Steuervorrichtung (62) verbunden ist, welche die Bremsvorrichtung (60) nach dem Auskuppeln der Kupplung (56) betätigt.

8. Ringspinnmaschine nach einem der Ansprüche 1 bis 7 dadurch gekennzeichnet, dass auch ein zweiter Zylinder (42,44,46) von beiden Enden durch je einen dritten und einen vierten Elektromotor (40) antreibbar ist, dass auch zwischen jedem der dritten und vierten Motoren (40) und den entsprechenden Enden des zweiten Zylinders (42,44,46) eine Kupplung (56) vorgesehen und zwischen jeder dieser letztgenannten Kupplungen (56) und dem zweiten Zylinder (42,44,46) ein Getriebe (58,63) vorhanden ist, dass die Steuervorrichtung (62) auch mit den letztgenannten Kupplungen (56) leitend verbunden ist und dass die Steuervorrichtung (62) das Öffnen und Schliessen aller vier Kupplungen (56) steuert, wobei alle vier Kupplungen (56) gleichzeitig geschlossen bzw. geöffnet werden.

9. Ringspinnmaschine nach Anspruch 8 und Anspruch 4, wobei das Streckwerk drei Zylinder umfast, dadurch gekennzeichnet, dass der zweite Zylinder der Mittelzylinder (46) ist, und dass der Mittelzylinder (46) und Eingangszylinder (44) miteinander an beiden Enden über je ein Getriebe (48) verbunden sind.

10. Ringspinnmaschine nach einem der vorangehenden Ansprüche, dadurch gekennzeichnet, dass für die Spindeln je ein Antriebsmotor (16) vorgesehen ist, wobei das Geschwindigkeitsverhältnis zwischen den Spindeln und dem Streckwerk durch die Steuervorrichtung (62) bestimmt wird.

11. Ringspinnmaschine nach einem der Ansprüche 1 bis 9, dadurch gekennzeichnet, dass für die Spindeln ein einziger Antriebsmotor vorgesehen ist, wobei das Geschwindigkeitsverhältnis zwischen den Spindeln und dem Streckwerk durch die Steuervorrichtung (62) bestimmt wird.

12. Ringspinnmaschine nach Anspruch 10 oder 11, dadurch gekennzeichnet, dass die Steuervorrichtung (62) derart ausgebildet ist, dass nach einer kurzen Beruhigungszeit bei der ersten Solldrehzahl die Sollfrequenz gemäss einer vorprogrammierten Hochlaufkurve (HK) erhöht wird, so dass alle Antriebe (12,14) der Maschine im Gleichtritt auf ihre Betriebsdrehzahl gebracht werden.

## Claims

1. Ring spinning machine with a plurality of rotatable spindles, a drive (16, 18) for the spindles, a drafting arrangement comprising several cylinders (42, 44, 46), and an electric motor (40) for the drafting arrangement the speed of the motor being controlled through the feed frequency, a controllable device (32) for generating the feed frequency for the motor (40), and a control device (62) for controlling the controllable device (32), a clutch (56) being disposed between the motor (40) and one of the cylinders (42, 44, 46) and a gear (58, 63) being disposed between the clutch (56) and the cylinder (42, 44, 46), whereby during the start-up of the machine the motor (40) can run up with the clutch (56) open until the motor reaches a first set speed without load, characterized in that the said cylinder (42, 44, 46) can be driven from both ends respectively by a first and a second electric motor (40), that between each motor (40) and the respective end of the said cylinder (42, 44, 46) a clutch (56) is provided and between each clutch (56) and the cylinder (42, 44, 46) a gear (58, 63) is provided, that the control device (62) is conductively connected both with the clutches (56) and with the controllable device (32) and that the control device (62) also controls the opening and dosing of the clutches (56), whereby the control device (62) determines the switching times for the opening and closing of the clutches (56) in such a way that during the start-up of the machine the motor speed can only then be transmitted to the said cylinder (42, 44, 46) by the simultaneous closure of the clutches (56) when the first and second motors (40) are synchronized with their feed frequencies controlled by the control device (62), and that due to the simultaneous opening of both clutches (56) during the running down of the machine said motor speed can no longer be transmitted to the said cylinder (42, 44, 46) when the synchronization of the first and second motors (40) with the feed frequency is no longer guaranteed and that a second gear (54) is disposed between each motor (40) and the clutch (56) allocated thereto.

2. Ring spinning machine as claimed in claim 1, characterized in that a sensor (64) is provided which reports the speed of a motor (40) to the control device (62).

3. Ring spinning machine as claimed in claim 1 or 2, characterized in that the control device (62) for uncoupling the clutches (56) is arranged in such a way that during the running down of the machine the feed frequency for the motors has fallen to a predetermined value.

4. Ring spinning machine as claimed in one of the previous claims, characterized in that the said cylinder (42, 44, 46) is the delivery cylinder (42).

5. Ring spinning machine as claimed in one of the previous claims, characterized in that the second gear (54) is a toothed belt gear.

6. Ring spinning machine as claimed in one of the previous claims, characterized in that each of the said motors (40) is a synchronous motor.

7. Ring spinning machine as claimed in one of the previous claims, characterized in that between each clutch (56) and the said cylinders (42, 44, 46) there is provided a controllable braking device (60) connected with the control device (62) which actuates the braking device (60) after the uncoupling of the clutch (56).

8. Ring spinning machine as claimed in one of the claims 1 to 7, characterized in that also a second cylinder (42, 44, 46) is drivable at both ends by third and fourth electric motors (40), respectively, that also between each of the third and fourth motors (40) and the respective ends of the second cylinder (42, 44, 46) there is provided a clutch (56) and between each of the last said clutches (56) and the second cylinder (42, 44, 46) there is provided a gear (58, 63), that the control device (62) is also conductively connected with the last said clutches (56) and that the control device (62) controls the opening and closing of all four clutches (56), whereby all four clutches (56) are opened and closed simultaneously.

9. Ring spinning machine as claimed in claim 8 and claim 4, wherein the drafting arrangement comprises three cylinders, characterized in that the second cylinder is the middle cylinder (46), and that the middle cylinder (46) and the infeed cylinder (44) are connected with one another at their ends through respective gears (48).

10. Ring spinning machine as claimed in one of the previous claims, characterized in that for each of the spindles there is provided a drive motor (16), whereby the speed ratio between the spindles and the drafting arrangement is determined by the control device (62).

11. Ring spinning machine as claimed in one of claims 1 to 9, characterized in that a single drive motor is provided for the spindles, whereby the speed ratio between the spindles and the drafting arrangement is determined by the control device (62).

12. Ring spinning machine as claimed in claim 10 or 11, characterized in that the control device (62) is arranged in such a way that after a brief stabilising period at the first set speed the set frequency is increased in accordance with a preprogrammed run-up curve (HK), so that all drives (12, 14) of the machine are brought to their operating speed at the same rate.

## Revendications

1. Machine à filer à anneaux possédant une pluralité de broches rotatives, un entrainement (16, 18) pour les broches, un train étireur qui comprend plusieurs cylindres (42, 44, 46), et un moteur électrique (40) pour le train étireur commandé par modulation du nombre de tours par sa fréquence d'alimentation, un dispositif pouvant être commandé (32) pour produire la fréquence d'alimentation du moteur (40), et un dispositif de commande (62) pour moduler le dispositif pouvant être commandé (32), machine dans laquelle un embrayage (56) est prévu entre le moteur (40) et un des cylindres (42, 44, 46), et un engrenage (58, 63) est prévu disposé entre l'embrayage (56) et le cylindre (42, 44, 46), et où, lors du démarrage de la machine, le moteur (40) peut être accéléré, sans charge et avec embrayage ouvert (56), jusqu'à ce qu'il atteigne un premier nombre de tours prescrit,
caractérisée par le fait
- que ledit cylindre (42, 44, 46) peut être entraîné aux deux extrémités, par un premier et un deuxième moteur électrique (40),
- qu'un embrayage (56) est prévu entre chaque moteur (40) et l'extrémité correspondante dudit cylindre (42, 44, 46), et qu'un engrenage (58, 63) existe entre chaque embrayage (56) et le cylindre (42, 44, 46),
- que le dispositif de commande (62) est relié d'une manière conductrice aussi bien avec les embrayages (56) qu'avec le dispositif pouvant être commandé (32), et
- que le dispositif de commande (62) dirige également l'ouverture et la fermeture des embrayages (56), et où le dispositif de commande (62) détermine les moments de déclenchement pour la fermeture respectivement l'ouverture des embrayages (56) de telle manière que, lors du démarrage de la machine, le nombre de tours du moteur ne peut être transmis audit cylindre (42, 44, 46) par la fermeture simultanée des embrayages (56), que lorsque les premier et deuxième moteurs (40) sont synchronisés dans leur fréquence d'alimentation modulée par le dispositif de commande (62), respectivement, lors de la mise à l'arrêt, ne peut plus être transmis audit cylindre (42, 44, 46) par l'ouverture simultanée des deux embrayages (56), lorsque la synchronisation des premier et deuxième moteurs (40) n'est plus assurée avec la fréquence d'alimentation
et par le fait
qu'un deuxième engrenage (54) est intercalé entre chaque moteur (40) et l'embrayage (56) lui étant adjoint

2. Une machine à filer à anneaux selon revendication 1,
caractérisée par le fait
qu'il y a un capteur (64) qui annonce le nombre de tours d'un moteur (40) au dispositif de commande (62).

3. Une machine à filer à anneaux selon revendication 1 ou 2,
caractérisée par le fait que
le dispositif de commande (62) servant à débrayer les embrayages (56), est conçu de telle manière que, lors de la mise à l'arrêt de la machine, la fréquence d'alimentation pour les moteurs rétrograde vers une valeur prédéterminée.

4. Une machine à filer à anneaux selon l'une des revendications précédentes,
caractérisée par le fait que
ledit cylindre (42, 44, 46) est le cylindre délivreur (42).

5. Une machine à filer à anneaux selon l'une des revendications précédentes,
caractérisée par le fait que
le deuxième engrenage (54) est un engrenage à courroie dentée.

6. Une machine à filer à anneaux selon l'une des revendications précédentes,
caractérisée par le fait que
chacun des moteurs cités (40) est un moteur synchrone.

7. Une machine à filer à anneaux selon l'une des revendications précédentes,
caractérisée par le fait
qu'il y a un dispositif de freinage pouvant être commandé (60) entre chaque embrayage (56) et lesdits cylindres (42, 44, 46), qui est relié avec le dispositif de commande (62) actionnant le dispositif de freinage (60) après le débrayage de l'embrayage (56).

8. Une machine à filer à anneaux selon l'une des revendications 1 à 7.
caractérisée par le fait
qu'un deuxième cylindre (42, 44, 46) peut également être entraîné aux deux extrémités, par un troisième et un quatrième moteur électrique (40), qu'un embrayage (56) est également prévu entre chacun des troisième et quatrième moteurs (40) et les extrémités correspondantes du deuxième cylindre (42, 44, 46), et qu'il y a un engrenage (58, 63) entre chacun de ces embrayages (56) cités en dernier et le deuxième cylindre (42, 44, 46), que le dispositif de commande (62) est également relié d'une manière conductrice avec les embrayages (56) cités en dernier, et que le dispositif de commande (62) dirige l'ouverture et la fermeture des quatre embrayages (56), et où les quatre embrayages (56) sont simultanément ouverts respectivement fermés.

9. Une machine à filer à anneaux selon revendication 8 et revendication 4, dans laquelle le train étireur comprend trois cylindres,
caractérisée par le fait que
le deuxième cylindre est le cylindre intermédiaire (46), et que le cylindre intermédiaire (46) et le cylindre d'entrée (44) sont reliés chaque fois entre eux aux deux extrémités, par un engrenage (48).

10. Une machine à filer à anneaux selon l'une des revendications précédentes,
caractérisée par le fait qu'un
moteur d'entraînement (16) est prévu pour chacune des broches, et où le rapport de vitesses entre les broches et le train étireur est déterminé par le dispositif de commande (62).

11. Une machine à filer à anneaux selon l'une des revendications 1 à 9,
caractérisée par le fait
qu'un seul moteur d'entraînement est prévu pour les broches, et où le rapport de vitesses entre les broches et le train étireur est déterminé par le dispositif de commande (62).

12. Une machine à filer à anneaux selon revendication 10 ou 11,
caractérisée par le fait que
le dispositif de commande (62) est conçu de telle façon que, après un temps de stabilisation court du premier nombre de tours prescrit, la fréquence prescrite est augmentée selon une courbe d'accélération (HK) programmée à l'avance, de sorte que tous les entraînements (12, 14) de la machine sont amenés en synchronisme sur leur nombre de tours de fonctionnement.
